Europäisches Patentamt

European Patent Office

Office européen des brevets

(11) Numéro de publication : **0 450 999 B1**

(12) **FASCICULE DE BREVET EUROPEEN**

(45) Date de publication du fascicule du brevet :
30.08.95 Bulletin 95/35

(51) Int. Cl.⁶ : **H02M 3/158,** G01S 7/28,
H02M 7/10

(21) Numéro de dépôt : 91400641.6

(22) Date de dépôt : 07.03.91

(54) **Dispositif d'alimentation électrique à réserve d'énergie, en particulier pour un tube hyperfréquence.**

(30) Priorité : 05.04.90 FR 9004390

(43) Date de publication de la demande :
09.10.91 Bulletin 91/41

(45) Mention de la délivrance du brevet :
30.08.95 Bulletin 95/35

(84) Etats contractants désignés :
DE GB

(56) Documents cités :
EP-A- 0 301 923
US-A- 4 761 722

(73) Titulaire : **DASSAULT ELECTRONIQUE**
**55, quai Marcel Dassault**
**F-92214 Saint-Cloud (FR)**

(72) Inventeur : **Lorec, Gérard**
**15, avenue du Lycée Lakanal**
**F-92340 Bourg-La-Reine (FR)**

(74) Mandataire : **Plaçais, Jean-Yves et al**
**Cabinet Netter,**
**40, rue Vignon**
**F-75009 Paris (FR)**

## Description

L'invention concerne un dispositif d'alimentation électrique, notamment du type de ceux qui doivent fonctionner à fréquence élevée.

Elle trouve une application avantageuse mais non limitative dans la réalisation d'une alimentation de tube hyperfréquence tel que celui utilisé dans un radar à impulsions.

Dans certaines applications, il s'avère nécessaire que ce tube puisse requérir de très forts appels de courant dans un délai très bref.

Il est donc indispensable que le dispositif d'alimentation de ce tube soit capable de réagir dans le même délai et de fournir la tension et la puissance nécessaires.

On connaît d'après les documents US-A-4 761 722 ou EP-A-301 923 un dispositif d'alimentation électrique qui comprend :

- une entrée pour une source d'alimentation sous tension continue, avec une première borne d'entrée et une deuxième borne d'entrée,
- une sortie pour une charge avec une première et une deuxième bornes de sortie,
- une inductance possédant une borne aval et une borne amont,
- un transformateur muni d'un enroulement primaire et d'au moins un enroulement secondaire,
- un bloc amplificateur de tension comportant une chaîne d'une pluralité de modules doubleurs de tension reliés entre eux, dont le premier module est relié à l'enroulement secondaire du transformateur, les deux bornes de sortie du dispositif étant définies par deux bornes du bloc amplificateur,
- des moyens de commutation de liaison propres à relier, en série avec ladite inductance, ledit enroulement primaire auxdites bornes d'entrée, et possédant des premier et deuxième états autorisant la circulation d'un courant de l'inductance dans l'enroulement primaire, respectivement dans un sens et dans l'autre,
- des moyens de commutation de distribution possédant trois états distincts ; et
- des moyens de commande propres :
    * à commander les moyens de commutation de distribution et de liaison selon une séquence de période choisie, chaque période comportant deux cycles successifs de durée identique,
    * à placer successivement au sein de chaque cycle les moyens de commutation de distribution dans leur premier état puis dans l'un au moins de leurs deuxième et troisième états,
    * à placer les moyens de commutation de liaison dans l'un de leurs premier et deuxième états pendant le premier cycle puis dans leur autre état pendant le deuxième cycle, et
    * à moduler, au sein de chaque cycle, les durées respectives de placement des moyens de commutation de distribution dans leurs états correspondants.

Toutefois, de tels dispositifs d'alimentation électrique ne sont pas capables de réaliser les performances mentionnées ci-avant tout en présentant une structure aisément réalisable à un coût industriellement raisonnable.

Le but principal de l'invention est d'apporter une solution à ce problème.

Un but de l'invention est de proposer un dispositif d'alimentation possédant, en quelque sorte, une réserve d'énergie disponible quasi-immédiatement en cas de fort appel de courant de la charge.

Un autre but de l'invention consiste à réaliser un tel dispositif de façon simple.

Selon une caractéristique générale de l'invention, les moyens de commutation de distribution comportent :

- une première unité de commutation reliant la borne amont de l'inductance à la première borne d'entrée et possédant un état de blocage du courant ainsi qu'un état passant autorisant le passage du courant dans le sens de la première borne d'entrée vers la borne amont de l'inductance,
- une deuxième unité de commutation reliant la borne aval de l'inductance à la première borne d'entrée et possédant un état de blocage du courant ainsi qu'un état passant autorisant le passage du courant dans le sens de la borne aval de l'inductance vers la première borne d'entrée,
- une troisième unité de commutation reliant la borne amont de l'inductance à la deuxième borne d'entrée et possédant un état de blocage interdisant le passage du courant dans le sens de la borne amont de l'inductance vers la deuxième borne d'entrée ainsi qu'un état passant autorisant le passage du courant dans le sens opposé, et
- une quatrième unité de commutation reliant la borne aval de l'inductance à la deuxième borne d'entrée et possédant un état de blocage du courant ainsi qu'un état passant autorisant le passage du courant dans le sens de la borne aval de l'inductance vers la deuxième borne d'entrée,
    * dans le premier état des moyens de commutation de distribution dans lequel ils relient la borne amont de l'inductance à la première borne d'entrée et sa borne aval à la deuxième borne d'entrée pour autoriser la circulation d'un courant amont-aval à travers l'inductance alimentée par la source, les première et quatrième unités de commutation sont dans leur état passant respectif, tandis que les autres unités de commutation sont dans leur état de blocage respectif,

* dans le deuxième état des moyens de commutation de distribution dans lequel ils autorisent la circulation d'un courant amont-aval à travers l'inductance et sa réinjection dans la source, les première et quatrième unités de commutation sont dans leur état de blocage respectif, tandis que les autres unités de commutation sont dans leur état passant respectif, et

* dans le troisième état des moyens de commutation de distribution dans lequel ils autorisent la circulation d'un courant amont-aval à travers l'inductance et à travers l'enroulement primaire, et les deuxième, troisième et quatrième unités de commutation sont dans leur état de blocage respectif, tandis que la première unité de commutation est dans son état passant.

Lorsque la charge est un tube d'émission hyperfréquence pour un radar à impulsions, la deuxième borne de sortie est l'une des bornes du premier module du bloc amplificateur de tension et est reliée à l'hélice de ce tube, tandis que la première borne de sortie est reliée à la cathode du tube; la période de la séquence de commande est alors synchrone de la période de répétition des impulsions du radar.

D'autres avantages et caractéristiques de l'invention apparaîtront à l'examen de la description détaillée ci-après et des dessins annexés sur lesquels :

- la figure 1 est un synoptique schématique d'un mode de réalisation du dispositif selon l'invention,
- la figure 2 illustre plus en détail un module doubleur de tension du dispositif de la figure 1,
- la figure 3 illustre très schématiquement un mode de réalisation des enroulements du transformateur,
- les figures 4 à 7 illustrent quatre chronogrammes de fonctionnement du dispositif de la figure 1, et
- la figure 8 illustre encore un diagramme représentatif du fonctionnement du dispositif de la figure 1.

Les dessins comportent pour l'essentiel des éléments de caractère certain. A ce titre ils font partie intégrante de la description et pourront non seulement servir à mieux faire comprendre la description détaillée ci-après mais aussi contribuer, le cas échéant, à la définition de l'invention.

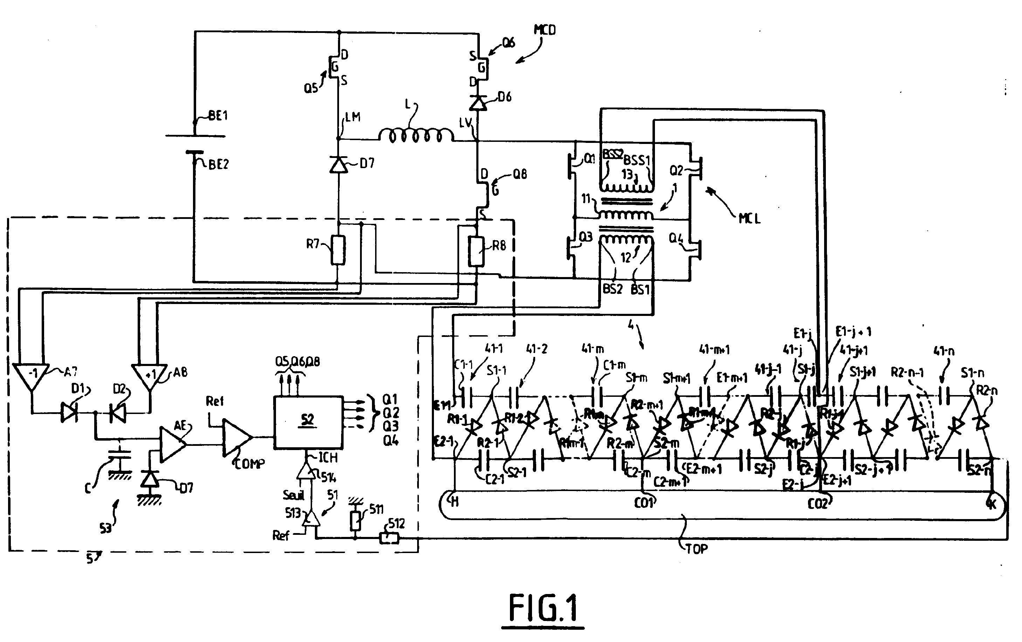

On suppose maintenant que la charge TOP destinée à être alimentée par le dispositif selon l'invention illustré sur la figure 1, est un tube d'émission hyperfréquence pour un radar à impulsions.

Sur cette figure, les bornes BE1 et BE2 désignent respectivement une première borne d'entrée et une deuxième borne d'entrée (qui peut être reliée à la masse) pour une source d'alimentation sous tension continue.

Cette tension continue peut être élaborée par une source de tension continue conventionnelle. Cependant, comme c'est généralement le cas à bord d'un avion, cette tension continue est dérivée d'un réseau triphasé et convenablement redressée par un jeu de diodes puis filtrée par un circuit inductif-capacitif. Dans ce cas, la tension redressée présente entre les bornes BE1 et BE2 peut avoir une valeur nominale d'environ 270 volts, mais être sujette à des fluctuations comprises entre 130 et 420 volts.

Un élément important de l'invention consiste en une inductance L dont les deux bornes amont LM et aval LV sont reliées aux deux bornes BE1 et BE2 par quatre unités de commutation montées en pont complet, formant des moyens de commutation dits "de distribution" MCD. L'homme du métier saura adapter la valeur du coefficient d'auto-induction de l'inductance de charge en fonction du régime de fonctionnement souhaité.

La première unité de commutation relie la borne amont LM de l'inductance à la première borne d'entrée BE1 et possède, d'une façon générale, un état de blocage du courant ainsi qu'un état passant autorisant le passage du courant dans le sens de la borne d'entrée BE1 vers la borne amont LM de l'inductance L. Cette première unité de commutation est représentée ici par un transistor de puissance à effet de champ Q5 dont la source est reliée à la borne amont LM de l'inductance et dont le drain est relié à la borne BE1.

La deuxième unité de commutation relie la borne aval LV de l'inductance à la borne d'entrée BE1 et possède, d'une façon générale, un état de blocage du courant ainsi qu'un état passant autorisant le passage du courant de la borne aval de l'inductance vers la première borne d'entrée BE1. Cette deuxième unité de commutation comporte ici un autre transistor à effet de champ Q6 monté en série avec une diode D6 ou redresseur. La source du transistor Q6 est reliée au drain du transistor Q5 et donc à la borne BE1 tandis que l'anode de la diode D6 est reliée à la borne aval LV de l'inductance L.

La troisième unité de commutation relie la borne amont LM de l'inductance à la deuxième borne d'entrée BE2 et possède, d'une façon générale, un état de blocage interdisant le passage du courant dans le sens de la borne amont de l'inductance vers cette deuxième borne d'entrée ainsi qu'un état passant autorisant le passage du courant dans le sens opposé. Cette unité comporte ici une diode D7 dont la cathode est reliée à la borne amont LM de l'inductance et dont l'anode est reliée à la borne BE2 par l'intermédiaire d'une résistance R7 dont la fonction sera explicitée ci-après.

La quatrième unité de commutation relie la borne aval LV de l'inductance à la borne BE2 et possède, d'une façon générale, un état de blocage du courant ainsi qu'un état passant autorisant le passage du courant dans le sens de la borne aval de l'inductance vers la borne BE2. Elle comporte ici un transistor à effet de champ Q8 dont le drain est relié à la borne aval LV de l'inductance et dont la source est reliée à la borne BE2 par une autre résistance R8 dont la fonction sera également explicitée ci-après.

Les deux bornes de l'enroulement primaire 11 d'un transformateur 1, de rapport unité, sont reliés respectivement par deux commutateurs de puissance Q3, Q4, tels que des transistors à effet de champ du type VMOS, à la deuxième borne d'entrée du dispositif BE2 par l'intermédiaire de la résistance R7.

Les deux bornes de cet enroulement primaire sont également respectivement reliées à la borne aval de l'inductance L par deux autres commutateurs de puissance Q1, Q2, analogues aux commutateurs Q3 et Q4. Les deux paires de commutateurs Q1-Q4 forment des moyens de commutation dits "de liaison" MCL.

On a représenté ici, à des fins de simplification, pour chaque commutateur ou unité de commutation, un seul transistor à effet de champ éventuellement associé à un redresseur. Cependant, dans certaines applications, chaque unité de commutation ou commutateur peut se composer d'une pluralité de transistors de puissance montés en parallèle et éventuellement associés à une pluralité de redresseurs.

Lorsque la fréquence de commutation peut atteindre 200 à 300 kHz, et lorsque le courant à commuter est de l'ordre de quelques ampères, on peut utiliser des transistors à effet de champ du type VMOS tels que ceux commercialisés par la Société des Etats-Unis INTERNATIONAL RECTIFIER sous la référence IRF PE 50.

Dans d'autres applications nécessitant des contraintes de puissance et de fréquence de commutation moins sévères, on peut utiliser d'autres types de transistors, par exemple des transistors bipolaires.

Les grilles respectives de ces transistors à effet de champ sont reliées à une logique de commande 52 propre à les commander selon une séquence de période choisie ainsi qu'on le verra ci-après.

Le transformateur 1 est muni d'un premier enroulement secondaire 12 dont les deux bornes BS1 et BS2 sont reliées à un bloc amplificateur de tension 4 comportant une chaîne d'une pluralité de modules doubleurs de tension 41-i. Comme on le verra ci-après, l'une des bornes de ce bloc amplificateur de tension définit une première borne de sortie haute tension pour le tube TOP, tandis que la deuxième borne BS2 de cet enroulement secondaire 12 définit une deuxième borne de sortie pour le dispositif.

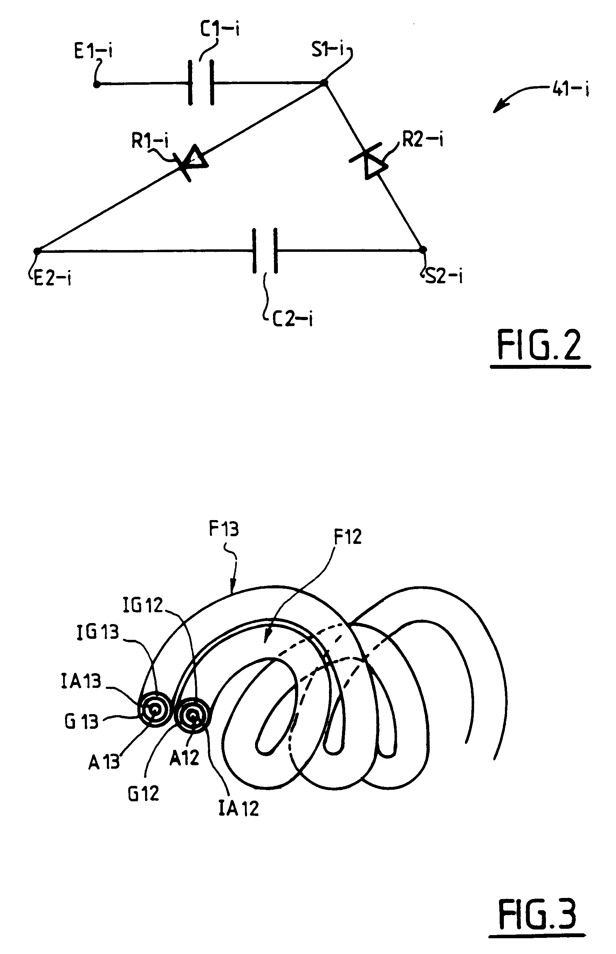

La figure 2 illustre la structure d'un module doubleur de tension 41-i.

D'une façon générale, on peut définir, dans ce quadripôle monté en doubleur de tension, une première borne d'entrée E1-i et une deuxième borne d'entrée E2-i, ainsi qu'une première borne de sortie S1-i et une deuxième borne de sortie S2-i. Un premier condensateur C1-i est connecté entre les premières bornes d'entrée et de sortie, tandis qu'un deuxième condensateur C2-i est connecté entre les deuxièmes bornes d'entrée et de sortie. Un premier redresseur R1-i est connecté entre la première borne de sortie S1-i et la deuxième borne d'entrée E2-i tandis qu'un deuxième redresseur est connecté entre les première et deuxième bornes de sortie, de sorte que la première borne de sortie S1-i est reliée à l'anode de l'un des redresseurs et à la cathode de l'autre.

Bien qu'un sens de connexion particulier pour les deux redresseurs ait été adopté sur cette figure, ce sens de connexion peut varier en fonction de la charge d'une part et, comme on le verra ci-après, en fonction de la place du module au sein de la chaîne du bloc amplificateur 4, d'autre part.

Cette chaîne de modules doubleurs de tension comporte une première rangée de m modules 41-1 à 41-m. Les première E1-1 et deuxième E2-1 bornes d'entrée du premier module 41-1 de cette première rangée sont respectivement reliées aux première (BS1) et deuxième (BS2) bornes de l'enroulement secondaire, tandis que les première et deuxième bornes d'entrée d'un autre module de cette rangée sont respectivement reliées aux première et deuxième bornes de sortie du module précédent. De plus, le sens de connexion des deux redresseurs aux bornes du deuxième condensateur de chaque module est le même pour tous les modules de cette rangée. En d'autres termes, une borne (par exemple l'anode) du deuxième redresseur R2-i du module 41-i est reliée à la borne opposée (par exemple la cathode) du premier redresseur 41-i+1 du module suivant 41-i+1 de cette rangée.

Dans le cas présent, où la charge est un tube d'émission hyperfréquence, possédant une hélice (ou corps) H, un premier collecteur CO1, un deuxième collecteur CO2, et une cathode K, la cathode du premier redresseur R1-i d'un module 41-i de cette première rangée est reliée à la deuxième borne d'entrée E2-i, tandis que l'anode de ce premier redresseur est reliée à la cathode du deuxième redresseur R2-i, dont l'anode est de ce fait reliée à la deuxième borne de sortie S2-i.

Bien qu'il pourrait être envisagé de n'agencer les modules doubleurs de tension qu'en une seule rangée (la deuxième borne de sortie du dernier module de cette rangée définissant alors la première borne de sortie haute tension du dispositif), la Demanderesse a observé qu'il était particulièrement avantageux d'agencer cette chaîne de modules doubleurs de tension en des deuxième et troisième rangées supplémentaires et de combiner cet agencement avec l'utilisation d'un enroulement secondaire supplémentaire 13 du transformateur.

Cet enroulement secondaire supplémentaire 13 possède deux bornes BSS1 et BSS2, respectivement homologues des bornes BS1 et BS2 de l'enroulement secondaire 12. Le sens du courant induit dans les deux enroulements secondaires 12 et 13 étant le même pour ces deux enroulements, deux bornes respectives des deux enroulements 12 et 13 sont dites homologues lorsqu'elles constituent toutes les deux soit une borne de départ pour le courant circulant dans l'enroulement secondaire, soit une borne d'arrivée.

La troisième rangée de modules comporte n-j modules. Le premier module de cette troisième rangée porte la référence 41-j+1 tandis que le dernier module porte la référence 41-n. De la même façon que précédemment, les première et deuxième bornes de sortie d'un module de cette troisième rangée sont respectivement reliées aux première et deuxième bornes d'entrée du module suivant. Par contre, les première E1-j+1 et deuxième E2-j+1 bornes d'entrée du premier module de cette troisième rangée sont respectivement reliées aux première (BSS1) et deuxième (BSS2) bornes de l'enroulement supplémentaire 13. Le sens de connexion des deux redresseurs aux bornes du deuxième condensateur de chaque module de cette troisième rangée est le même pour tous les modules de cette troisième rangée et est également le même que celui de la première rangée. En d'autres termes, ici, la cathode du premier redresseur R1-j+1 du premier module de cette troisième rangée est reliée à la deuxième borne d'entrée E2-j+1 de ce premier module tandis que l'anode du deuxième redresseur R2-n du dernier module de cette troisième rangée est reliée à la deuxième borne de sortie S2-n de ce dernier module.

La deuxième rangée de modules comporte m-j modules. Le premier module de cette deuxième rangée porte la référence 41-j tandis que le dernier module porte la référence 41-m+1. Là encore, les première et deuxième bornes de sortie d'un module de cette deuxième rangée sont respectivement reliées aux première et deuxième bornes d'entrée du module suivant. Par contre, la deuxième borne d'entrée E2-j du premier module de cette deuxième rangée est reliée à la deuxième borne d'entrée E2-j+1 du premier module de la troisième rangée et la première borne d'entrée E1-j du premier module de cette deuxième rangée est reliée à la première borne d'entrée E1-j+1 du premier module de la troisième rangée. De plus, bien que le sens de connexion des deux redresseurs aux bornes du deuxième condensateur de chaque module soit le même pour tous les modules de cette deuxième rangée, ce sens de connexion est opposé à celui des première et troisième rangées. En d'autres termes, ici, l'anode du premier redresseur R1-j du premier module de cette deuxième rangée est reliée à la deuxième borne d'entrée E2-j de ce premier module.

La deuxième borne de sortie S2-m+1 du dernier module de cette deuxième rangée est confondue avec la deuxième borne de sortie S2-m du dernier module de la première rangée.

Les connexions des bornes d'entrée des premiers modules des deuxième (41-j) et troisième (41-j+1) rangées sont à remarquer :
l'enroulement secondaire supplémentaire est vu en sens opposés par les diodes de ces modules 41-j et 41-j+1, de sorte que les tensions aux bornes de leurs capacités sont de même polarité. Ceci s'étend aux autres modules des deuxième et troisième rangées. Cette configuration permet de monter en série jusqu'à deux fois plus de rangées qu'il n'y a d'enroulements secondaires.

Dans cette chaîne de modules doubleurs de tension, la deuxième borne de sortie S2-n du dernier module de la troisième rangée définit la première borne de sortie haute tension pour le tube TOP, et est reliée à la cathode K de celui-ci. La deuxième borne d'entrée E2-1 définit la deuxième borne de sortie du dispositif et est reliée à l'hélice du tube. La deuxième borne de sortie S2-m du dernier module de la première rangée définit une troisième borne de sortie haute tension de ce bloc amplificateur 4 et est reliée au premier collecteur CO1 du tube, tandis que la deuxième borne d'entrée E2-j+1 du premier module de la troisième rangée définit une quatrième borne de sortie haute tension et est reliée au deuxième collecteur CO2 du tube TOP.

L'homme du métier comprendra qu'un tel dispositif permet d'obtenir une haute tension, entre les bornes E2-1 et S2-n, qui est en fait la somme de trois hautes tensions respectivement délivrées entre les bornes E2-1 et S2-m, S2-m et E1-j, et, E1-j et S2-n.

Comme on le verra ci-après, en fonctionnement, le transformateur 1 délivre alternativement, aux bornes des enroulements secondaires, une tension positive et négative d'environ 550 volts. Le nombre de doubleurs de tension est alors ajusté pour obtenir, en régime établi, une différence de potentiel d'environ 13 kilovolts en valeur absolue entre l'hélice et le premier collecteur, d'environ 4 kilovolts en valeur absolue entre le premier et le deuxième collecteur, et d'environ 9 kilovolts en valeur absolue entre le deuxième collecteur et la cathode K. Ainsi, la tension disponible au deuxième collecteur est d'environ 17 kilovolts et celle disponible à la cathode est d'environ 26 kilovolts.

Un tel montage, avec deux enroulements secondaires, s'applique particulièrement bien à l'alimentation d'un tel tube hyperfréquence. En effet, l'homme du métier sait que, dans un tel tube, la consommation d'énergie est plus importante entre la cathode et le second collecteur et entre la cathode et le premier collecteur qu'entre la cathode et l'hélice. Aussi, le second enroulement secondaire 13 permet de charger très rapidement les condensateurs des différents modules de tension connectés à ces bornes, et notamment ceux situés entre le second collecteur et la cathode, ce qui permet donc de fournir très rapidement la puissance nécessaire entre le second collecteur et la cathode. Il convient à cet égard de remarquer que les condensateurs des modules doubleurs de tension des deuxième et troisième rangées ont des capacités plus importantes que les condensateurs de la première rangée, c'est-à-dire ceux situés entre l'hélice et le premier collecteur.

Plus généralement, les valeurs des capacités peuvent être aisément ajustées pour satisfaire des caractéristiques désirées pour :
- l'impédance statique,
- l'impédance dynamique, notamment pour la réponse à un bref appel de courant élevé,
- le spectre d'ondulations résiduelles.

Ceci est particulièrement intéressant lors de l'utilisation d'un tube hyperfréquence, émetteur de puissance à large bande, à impulsions synchrones du découpage effectué dans l'alimentation ici décrite.

Le second enroulement secondaire 13 présente un avantage supplémentaire. Il permet de réduire l'impédance du bloc amplificateur de tension 4 et de favoriser ainsi le fonctionnement du dispositif.

La haute tension délivrée à la borne de sortie S2-m du bloc amplificateur de tension est sujette à des variations en fonction de l'appel de courant du tube d'émission. Aussi, est-il prévu que les moyens de commande 5 des moyens de commutation comportent une boucle de régulation 51 de cette tension délivrée à la cathode K. Plus précisément, cette boucle comporte un pont diviseur de tension formé de deux résistances 511 et 512, propres à ramener la tension de la valeur de 26000 volts à la valeur de 10 volts environ. L'écart entre cette tension et une valeur de référence est amplifié dans un amplificateur 513. Cette valeur de référence, de l'ordre également de 10 volts, peut être fournie par une diode zener reliée à la masse. Cet écart amplifié est ensuite comparé à un seuil dans un comparateur 514 qui délivre à l'unité logique 52 une information ICH représentative de l'appel de courant du tube. Comme on vient de le voir, cette information est reliée à l'écart de tension disponible aux bornes du tube et la tension nominale.

Il est également prévu, au sein des moyens de commande 5, des moyens de régulation de courant dont les résistances R7 et R8 font partie. Ceux-ci comportent, en outre, un amplificateur A7 de gain -1 connecté en parallèle aux bornes de la résistance R7 ainsi qu'un autre amplificateur A8, de gain 1, connecté en parallèle aux bornes de la résistance R8. La sortie de l'amplificateur A7 est reliée à l'anode d'une diode D1 tandis que la sortie de l'amplificateur A8 est reliée à l'anode d'une diode D2. Les cathodes respectives de ces deux diodes sont reliées ensemble à une première entrée d'un amplificateur d'erreur AE, dont la deuxième entrée reçoit une tension de référence, obtenue ici par une diode Zener DZ dont l'anode est reliée à la masse.

Une capacité de filtrage C relie également les cathodes des diodes D1 et D2 à la masse.

La sortie de l'amplificateur d'erreur AE est reliée à une première entrée d'un comparateur COMP dont l'autre entrée est propre à recevoir une tension de référence en dents de scie REF. La sortie de ce comparateur est reliée à la logique de commande 52.

L'homme du métier remarque que l'enroulement secondaire supplémentaire 13 est porté à une tension continue de l'ordre de 17 kilovolts. En conséquence, il convient de minimiser l'inductance de fuite existant dans tout transformateur entre l'enroulement primaire et l'enroulement secondaire, pour éviter que des surtensions importantes apparaissent au niveau des commutateurs de puissance Q1-Q4 lors des commutations. La Demanderesse a résolu ce problème tout en ne pénalisant pas l'encombrement du dispositif, en utilisant un transformateur dont les enroulements primaire et secondaire sont formés par des fils coaxiaux tels que représentés très schématiquement sur la figure 3.

Les deux fils coaxiaux F12 et F13 sont enroulés autour d'un noyau magnétique (non représenté sur cette figure à des fins de simplification). L'âme A12 du fil F12 constitue le premier enroulement secondaire 12 tandis que l'âme A13 du fil F13 constitue le deuxième enroulement secondaire 13. Les gaines G12 et G13 de ces fils coaxiaux sont alors connectés en parallèle pour former ensemble l'enroulement primaire 11 du transformateur. Les âmes et gaines de ces fils coaxiaux sont isolés à l'aide d'isolants IA12, IA13, IG12, IG13, capables, en ce qui concerne le fil F13, de supporter une très haute tension continue. On pourra par exemple choisir du polytétrafluoroéthylène ("téflon").

Le principe général de fonctionnement du dispositif selon l'invention repose notamment sur le fait que les moyens de commutation de distribution possèdent trois états, à savoir :
- un premier état dans lequel ils relient la borne amont LM de l'inductance L à la borne d'entrée BE1 et sa borne aval LV à la borne BE2 pour autoriser la circulation d'un courant amont-aval à travers l'inductance L alimentée par la source. En d'autres termes, on peut assimiler ce premier état à un état de "charge" de l'inductance L par la source ;
- un deuxième état dans lequel ils autorisent la circulation d'un courant amont-aval à travers l'inductance L, c'est-à-dire un courant circulant depuis la borne amont LM vers la borne aval LV, et sa réinjection dans la source. Ce deuxième état peut être assimilé ainsi à un état de "décharge" de l'inductance L dans la source, ou encore à une restitution à la source de l'énergie emmagasinée dans l'inductance ;

- un troisième état dans lequel ils autorisent la circulation d'un courant amont-aval à travers l'inductance L et à travers l'enroulement primaire 11 du transformateur. Ce troisième état peut alors être assimilé à une restitution de l'énergie emmagasinée par l'inductance L à l'enroulement primaire.

D'un point de vue pratique, dans le premier état, les première et quatrième unités de commutation Q5 et Q8 sont dans leur état passant respectif, tandis que les autres unités de commutation Q6,D6 et D7 sont dans leur état de blocage respectif. En d'autres termes (la diode D7 ne conduisant pas), le courant circule depuis la borne d'entrée BE1 à travers le transistor Q5 puis à travers l'inductance L et à travers le transistor Q8 et la résistance R8 jusqu'à la borne d'entrée BE2.

Dans le deuxième état, les première et quatrième unités de commutation Q5, Q8 sont dans leur état de blocage respectif, tandis que les autres unités de commutation sont dans leur état passant respectif. En d'autres termes, la borne amont LM de l'inductance est reliée à la borne BE2 (la diode D7 conduisant) et le courant, circulant dans l'inductance dans le sens amont-aval traverse la diode D6 et le transistor Q6 pour être réinjecté à la borne BE1 de la source.

Dans le troisième état, seule la première unité de commutation Q5 est dans son état passant tandis que les autres sont dans leur état de blocage respectif. En d'autres termes, il y a circulation depuis la source d'un courant à travers le transistor Q5, à travers l'inductance dans le sens amont-aval et à travers l'enroulement primaire du transformateur.

Quant aux moyens de commutation de liaison MCL, ils possèdent un premier état dans lequel l'un des commutateurs d'une première paire (par exemple Q1) et l'un des commutateurs de la deuxième paire (par exemple Q3) sont dans leur état passant, les autres commutateurs (Q2, Q3) étant dans leur état bloquant. Ils possèdent également un deuxième état dans lequel l'autre commutateur de la première paire (ici Q2) et l'autre commutateur de la deuxième paire (ici Q3) sont dans leur état passant, les autres commutateurs (ici Q1, Q4) étant dans leur état bloquant.

On remarque donc que les deux courants circulant dans l'enroulement primaire, respectivement dans les deux états évoqués ci-avant, sont de sens opposés.

La logique de commande 52 est propre alors à commander les moyens de commutation selon une séquence S de période 2T choisie, synchrone de la période de répétition des impulsions du radar. Chaque séquence S comporte deux cycles successifs CY1, CY2 de durée identique, ici de durée T sous-multiple de la période de répétition des impulsions du radar. Cette durée T peut être comprise entre 5 microsecondes et 10 microsecondes. Au cours de chaque cycle, la logique de commande place successivement les moyens de commutation de distribution (Q5, Q6, D7, Q8) dans leur premier état puis dans l'un au moins de leurs deuxième et troisième états. De plus, cette logique de commande est propre à moduler, au sein de ce cycle, les durées respectives de placement des moyens de commutation dans leurs états correspondants.

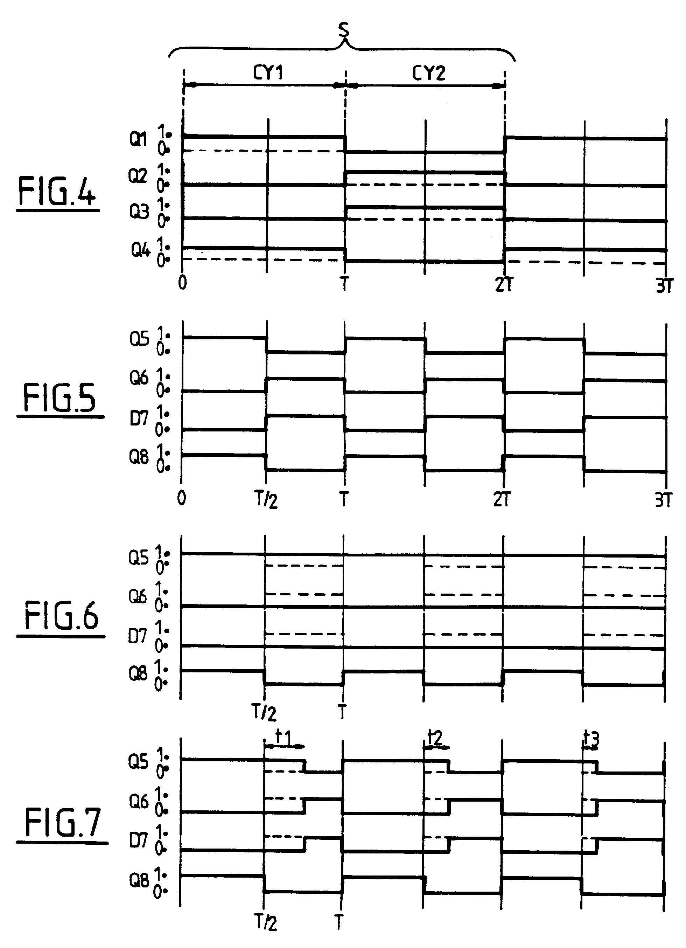

Au cours du premier cycle CY1 de chaque séquence, la logique de commande 52 place les moyens de commutation de liaison Q1-Q4 dans l'un de leurs premier et deuxième états (ici le premier), puis dans leur autre état (ici le deuxième) au cours du deuxième cycle CY2 (figure 4).

On suppose maintenant que le dispositif fonctionne en régime établi, c'est-à-dire que l'inductance L a été chargée avec une quantité d'énergie prédéterminée correspondant à la puissance maximale susceptible d'être consommée par le tube TOP. En d'autres termes, on suppose qu'un courant sensiblement constant I0 circule à travers l'inductance L.

L'homme du métier comprendra que le bloc amplificateur de tension est vu, ramené au primaire du transformateur, comme une capacité présentant, à pleine charge, une tension de l'ordre de 550 volts.

On suppose en conséquence que, dans le troisième état, il y a circulation d'un courant dans l'enroulement primaire 11, donnant naissance à une tension VP de l'ordre de 550 volts (en valeur absolue) aux bornes de cet enroulement primaire.

La figure 5 illustre un chronogramme de fonctionnement du dispositif correspondant à une configuration dans laquelle aucun courant n'est débité dans l'enroulement primaire 11, le bloc amplificateur 4 maintenant à ses bornes une tension égale à sa valeur nominale. En d'autres termes, le dispositif fonctionne ici en quelque sorte "à vide".

Pendant le premier cycle, les moyens de commutation de distribution sont dans leur premier état. Les transistors Q5 et Q8 sont passants et la diode D7 ne conduit pas. Aussi, un courant I circule dans l'inductance L et dans la résistance R8 et sa valeur croît depuis la valeur I0. A l'instant T/2, les moyens de commutation de distribution sont placés dans leur deuxième état. Les transistors Q5 et Q8 sont dans leur état de blocage tandis que le transistor Q6 est dans son état passant, la diode D7 conduisant. Le courant décroît alors dans l'inductance depuis sa valeur maximale jusqu'à atteindre la valeur I0.

Si le dispositif présentait un rendement idéal de 100%, l'instant de commutation serait rigoureusement égal à $\frac{T}{2}$. Cependant, l'homme du métier sait qu'un tel dispositif présente des pertes conduisant à un décalage de cet instant de commutation théorique. IL convient donc de maintenir cet instant de commutation au voisinage de $\frac{T}{2}$. C'est le rôle des moyens de régulation.

L'amplificateur A8, connecté en parallèle aux bornes de la résistance R8 fournit en sa sortie une tension représentative du courant circulant dans la résistance R8. De même, l'amplificateur A7 fournit en sa sortie une tension représentative du courant circulant dans la résistance R7. L'amplificateur inverseur A7 permet d'inverser le signe de la tension aux bornes de la résistance R7 et de fournir ainsi une tension de même signe que celle disponible en sortie de l'amplificateur A8 (en effet, le courant circulant dans la résistance R7 est de sens opposé au courant circulant dans la résistance R8 ).

Les deux diodes D1 et D2 réunies par leurs cathodes respectives réalisent une fonction "OU" fournissant, après filtrage par la capacité C, une tension présentant une évolution continue. En d'autres termes, on réalise ici une moyenne des courants circulant respectivement dans la résistance R8 et dans la résistance R7, c'est-à-dire pendant que les moyens de commutation de distribution sont dans leur premier état puis dans leur deuxième état.

L'écart entre l'instant de commutation réel et l'instant théorique $\frac{T}{2}$ conduit à une différence entre les allures des tensions aux bornes des résistances R8 et R7 ce qui se traduit par un signal correspondant en sortie du comparateur COMP. Ce signal, fourni à la logique de commande 52, permet à celle-ci, par action sur les grilles de commande des transistors, de moduler la durée de placement des moyens de commutation de distribution dans leur premier et leur deuxième état. En d'autres termes, l'instant de commutation du premier état au deuxième état est modulé d'une valeur epsilon par rapport à l'instant théorique T/2. Le courant circulant dans l'inductance est ainsi régulé en permanence pour être maintenu sensiblement à la valeur I0.

L'homme du métier remarquera que, dans le deuxième état des moyens de commutation, la réinjection du courant depuis l'inductance L dans la source est possible puisque la tension aux bornes de la capacité ramenée au primaire est supérieure à la tension de la source d'entrée.

De plus, la présence de la diode D6 évite, lorsque les moyens de commutation de distribution sont dans leur premier état (Q5 et Q8 passants), un court-circuit de l'inductance L par la conduction de la diode équivalente source-drain du transistor Q6.

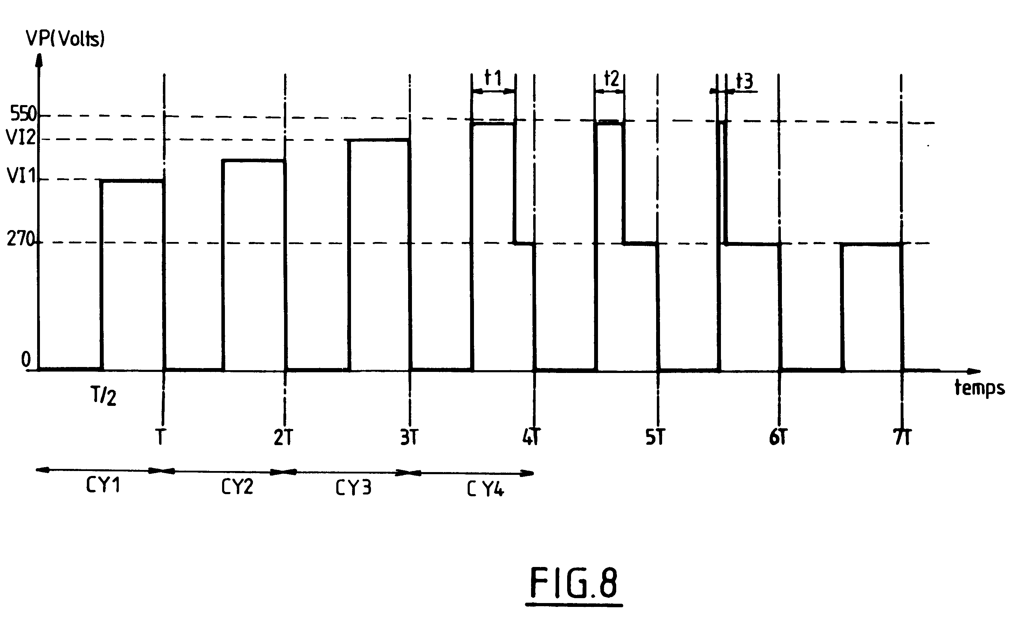

Les figures 6 et 7 illustrent des chronogrammes de fonctionnement du dispositif relatifs respectivement à de fort et de faible appels de courant du tube TOP. On s'appuiera également, pour décrire de type de fonctionnement, sur la figure 8 qui illustre l'évolution de la tension VP aux bornes de l'enroulement primaire du transformateur.

Lorsque la valeur de la tension délivrée par le bloc amplificateur 4 chute par rapport à la tension nominale, l'information ICH représentative de cet écart de tension est transmise à la logique de commande 52. On rappelle ici que cette chute de tension nominale se traduit également par une chute de tension aux bornes de la capacité ramenée au primaire.

La logique de commande va alors placer, au sein de chaque cycle, les moyens de commutation de distribution successivement dans leur premier état pendant une durée égale à la moitié du cycle, puis dans leur troisième état pendant le reste du cycle ou pendant une durée inférieure en fonction de l'information ICH.

Ainsi, si l'on suppose que la chute de tension est importante, correspondant donc à un fort appel de courant, la logique de commande va, au cours de plusieurs périodes successives, placer alternativement les moyens de commutation de distribution, au cours de chaque cycle, dans leur premier état pendant la durée T/2 et dans leur troisième état pendant l'autre moitié du cycle, ce qui aura pour conséquence de faire évoluer la tension VP depuis une valeur VI1, comprise entre la valeur VS de la tension aux bornes de la source (270 volts) et la valeur limite 550 volts, jusqu'à une valeur VI2 voisine de la valeur limite 550 volts.

A partir de là, la logique de commande va progressivement réduire le temps de placement des moyens de commutation dans leur troisième état pour les placer, pendant le reste du cycle à nouveau dans leur deuxième état. En d'autres termes, au cours du quatrième cycle CY4 (figure 8) par exemple, les moyens de commutation sont placés dans leur premier état pendant la durée T/2, puis dans leur troisième état pendant la durée t1, puis dans leur deuxième état pendant la durée T-t1. Au fur et à mesure des commutations, la tension VP tend vers la tension limite 550 volts correspondant à la tension nominale délivrée par le bloc amplificateur 4, ce qui conduit donc à une réduction des durées t2 et t3 pendant lesquelles les moyens de commutation de distribution sont placés dans leur troisième état.

Lorsque la tension nominale est atteinte, ou encore lorsque la tension VP a atteint la valeur limite 550 volts, la logique de commande, en réponse à la réception de l'information ICH, remet le dispositif dans sa configuration de fonctionnement à vide plaçant alternativement les moyens de commutation de distribution dans leur premier et leur deuxième états.

L'homme du métier remarquera également, que, lorsque le courant traverse l'enroulement primaire du transformateur, celui-ci traverse également la résistance R7. Il n'y a donc pas discontinuité d'information au niveau de l'amplificateur d'erreur AE.

En ce qui concerne les moyens de commutation de liaison Q1-Q4, puisque l'on obtient respectivement pendant deux cycles successifs deux courants circulant en sens opposé dans l'enroulement primaire du transformateur, la tension générée aux bornes du secondaire du transformateur pendant un cycle est donc de signe opposé à celle générée pendant le cycle précédent.

L'homme du métier comprendra que le transformateur 1 va donc charger les condensateurs du bloc amplificateur de tension 4 alternativement avec des tensions égales mais de signes opposés. Ainsi, on obtiendra, avec une tension VP de l'ordre de 550 volts en valeur absolue, une tension de 1100 volts en valeur absolue aux bornes du deuxième condensateur de chaque module doubleur de tension. Il en sera de même aux bornes du premier condensateur de chaque module excepté pour ceux des premiers modules de chaque rangée pour lesquels la valeur absolue de la tension à leurs bornes sera de 550 volts.

On a décrit ci-avant un fonctionnement du dispositif offrant une montée progressive de la tension de la charge vers sa valeur nominale s'étendant sur plusieurs périodes, notamment par des réductions progressives des valeurs t1, t2 et t3. On pourrait bien entendu concevoir des chronogrammes de fonctionnement permettant une montée plus rapide et plus brutale de la tension.

Le dispositif ainsi décrit offre donc une inductance dans laquelle circule en permanence un courant nominal correspondant à l'énergie maximale requise par le tube TOP. Lorsque ce dernier ne provoque pas d'appel de courant, le courant I0 est réinjecté dans la source d'entrée. Par contre, en cas d'appel de courant, l'énergie emmagasinée par l'inductance L est quasi-immédiatement disponible pour alimenter l'enroulement primaire avec le courant I0 et fournir la puissance souhaitée. On obtient un gain de temps appréciable, par rapport à une situation classique dans laquelle le courant devrait passer de la valeur nulle à la valeur I0.

On a décrit ci-avant un fonctionnement du dispositif en régime établi. Pendant le régime transitoire nécessaire à l'établissement d'un courant de valeur I0 nominale circulant dans l'inductance, les moyens de commutation de distribution sont alternativement placés dans leur premier état ("charge" de l'inductance par la source) puis dans leur troisième état ("restitution" de l'énergie à l'enroulement primaire) jusqu'à l'établissement de la tension nominale aux bornes du bloc amplificateur 4. On remarque donc que ce régime transitoire est analogue à un fonctionnement du dispositif, en régime établi, sous fort appel de courant.

D'une façon générale, on peut être amené à modifier les chronogrammes de commande de commutation en fonction des caractéristiques spécifiques des moyens de commutation, notamment s'il s'agit de transistors de puissance à effet de champ, et une solution consiste à prévoir un temps de blocage de tous les commutateurs pour éviter la charge de leur capacité parasite drain-source dans la maille de puissance et pour assurer une bonne régulation à vide du dispositif.

L'invention n'est pas limitée au mode de réalisation ci-dessus décrit, mais en embrasse toutes les variantes contenues dans le cadre des revendications ci-après, notamment la suivante :

- on pourrait envisager de placer, en série avec le redresseur D7, un transistor à effet de champ Q7 dont la source serait reliée à l'anode de la diode D7 et dont le drain serait relié à la résistance R7,
- on pourrait envisager de munir le transformateur d'autres enroulements secondaires supplémentaires convenablement connectés au bloc amplificateur de tension,
- de même, d'autres rangées de modules doubleurs de tension pourraient être connectées en parallèle avec certaines au moins des rangées du bloc amplificateur de tension déjà montées en série.

Bien entendu, certains des moyens décrits ci-dessus peuvent être omis dans les variantes où ils ne servent pas.

## Revendications

1. Dispositif d'alimentation électrique comprenant :
   - une entrée pour une source d'alimentation sous tension continue, avec une première borne d'entrée (BE1) et une deuxième borne d'entrée (BE2),
   - une sortie pour une charge (TOP) avec une première (S2-n) et une deuxième (E2-1) bornes de sortie,
   - une inductance (L) possédant une borne aval (LV) et une borne amont (LM),
   - un transformateur (1) muni d'un enroulement primaire (11) et d'au moins un enroulement secondaire (12, 13),
   - un bloc amplificateur de tension (4) comportant une chaîne d'une pluralité de modules doubleurs de tension reliés entre eux, dont le premier module est relié à l'enroulement secondaire du transformateur, les deux bornes de sortie du dispositif étant définies par deux bornes du bloc amplificateur (S2-n, E2-1),
   - des moyens de commutation de liaison (Q1-Q4) propres à relier, en série avec ladite inductance (L), ledit enroulement primaire (11) auxdites bornes d'entrée (BE1, BE2), et possédant des premier et deuxième états autorisant la circulation d'un courant de l'inductance dans l'enroulement primaire, respectivement dans un sens et dans l'autre,

- des moyens de commutation de distribution (Q5, Q6, D7, Q8) possédant trois états distincts ; et
- des moyens de commande propres :
  * à commander les moyens de commutation de distribution et de liaison selon une séquence de période choisie, chaque période comportant deux cycles successifs (CY1, CY2) de durée (T) identique,
  * à placer successivement au sein de chaque cycle les moyens de commutation de distribution (Q5, Q6, D7, Q8) dans leur premier état puis dans l'un au moins de leurs deuxième et troisième états,
  * à placer les moyens de commutation de liaison (Q1-Q4) dans l'un de leurs premier et deuxième états pendant le premier cycle (CY1) puis dans leur autre état pendant le deuxième cycle (CY2), et
  * à moduler, au sein de chaque cycle, les durées respectives de placement des moyens de commutation de distribution (Q5, Q6, D7, Q8) dans leurs états correspondants,

caractérisé en ce que les moyens de commutation de distribution (MCD) comportent :

- une première unité de commutation (Q5) reliant la borne amont (LM) de l'inductance (L) à la première borne d'entrée (BE1) et possédant un état de blocage du courant ainsi qu'un état passant autorisant le passage du courant dans le sens de la première borne d'entrée (BE1) vers la borne amont (LM) de l'inductance (L),
- une deuxième unité de commutation (Q6,D6) reliant la borne aval (LV) de l'inductance (L) à la première borne d'entrée (BE1) et possédant un état de blocage du courant ainsi qu'un état passant autorisant le passage du courant dans le sens de la borne aval (LV) de l'inductance (L) vers la première borne d'entrée (BE1),
- une troisième unité de commutation (D7) reliant la borne amont (LM) de l'inductance (L) à la deuxième borne d'entrée (BE2) et possédant un état de blocage interdisant le passage du courant dans le sens de la borne amont (LM) de l'inductance (L) vers la deuxième borne d'entrée (BE2) ainsi qu'un état passant autorisant le passage du courant dans le sens opposé, et
- une quatrième unité de commutation (Q8) reliant la borne aval (LV) de l'inductance (L) à la deuxième borne d'entrée (BE2) et possédant un état de blocage du courant ainsi qu'un état passant autorisant le passage du courant dans le sens de la borne aval (LV) de l'inductance (L) vers la deuxième borne d'entrée (BE2),

en ce que dans le premier état des moyens de commutation de distribution dans lequel ils relient la borne amont (LM) de l'inductance (L) à la première borne d'entrée (BE1) et sa borne aval (LV) à la deuxième borne d'entrée pour autoriser la circulation d'un courant amont-aval à travers l'inductance (L) alimentée par la source, les première (Q5) et quatrième (Q8) unités de commutation sont dans leur état passant respectif, tandis que les autres unités de commutation (Q6,D6 ; D7) sont dans leur état de blocage respectif,

en ce que dans le deuxième état des moyens de commutation de distribution dans lequel ils autorisent la circulation d'un courant amont-aval à travers l'inductance (L) et sa réinjection dans la source, les première (Q5) et quatrième (Q8) unités de commutation sont dans leur état de blocage respectif, tandis que les autres unités de commutation (Q6,D6 ; D7) sont dans leur état passant respectif, et

en ce que dans le troisième état des moyens de commutation de distribution dans lequel ils autorisent la circulation d'un courant amont-aval à travers l'inductance (L) et à travers l'enroulement primaire (11), les deuxième (Q6,D6), troisième (D7) et quatrième (Q8) unités de commutation sont dans leur état de blocage respectif, tandis que la première (Q5) unité de commutation est dans son état passant.

2. Dispositif selon la revendication 1, caractérisé en ce que la charge est un tube d'émission hyperfréquence pour un radar à impulsions,

en ce que la deuxième borne de sortie est l'une des bornes (E2-1) du premier module du bloc amplificateur et est reliée à l'hélice (H) du tube, tandis que la première borne de sortie est reliée à la cathode (K) du tube,

et en ce que la période de la séquence de commande est synchrone de la période de répétition des impulsions du radar.

3. Dispositif selon l'une des revendications précédentes, caractérisé en ce que les moyens de commande sont propres à faire passer les moyens de commutation de distribution dans leur deuxième état ou leur troisième état au sein d'une période en fonction d'une mesure représentative de l'appel de courant de la charge (TOP).

4. Dispositif selon la revendication 3, caractérisé en ce que la mesure représentative de l'appel de courant de la charge (TOP) est effectuée au niveau de la première borne de sortie (S2-n) et correspond à une mesure de l'écart entre la tension délivrée en cette première borne de sortie et une référence.

5. Dispositif selon la revendication 4, caractérisé en ce que les moyens de commande comportent une boucle de régulation (S1) de la tension délivrée à la première borne de sortie (S2-n) apte à effectuer ladite mesure et sont propres à agir sur les valeurs des durées de placement des moyens de commutation de distribution dans leurs deuxième et troisième états.

6. Dispositif selon l'une des revendications précédentes, caractérisé en ce que les moyens de commande comprennent des moyens de régulation de courant propres à effectuer, au cours de chaque cycle, la moyenne du courant circulant dans l'inductance (L) pendant que les moyens de commutation de distribution sont placés dans le premier état, et du courant circulant dans l'inductance pendant le reste du cycle.

7. Dispositif selon l'une des revendications précédentes, caractérisé en ce que, dans le deuxième état, les moyens de commutation de distribution relient la borne amont (LM) de l'inductance (L) à la deuxième borne d'entrée (BE2) et sa borne aval (LV) à la première borne d'entrée (BE1), et en ce que, dans le troisième état, ils relient la borne amont (LM) de l'inductance (L) à la première borne d'entrée (BE1).

8. Dispositif selon la revendication 7, caractérisé en ce que la première unité de commutation comporte au moins un transistor à effet de champ (Q5) dont le drain est relié à la première borne d'entrée (BE1) et dont la source est reliée à la borne amont (LM) de l'inductance (L), en ce que la deuxième unité de commutation comporte au moins un transistor à effet de champ (Q6) et un redresseur (D6) montés en série, la source du transistor étant reliée à la première borne d'entrée (BE1) et l'anode du redresseur étant reliée à la borne aval (LV) de l'inductance (L), en ce que la troisième unité de commutation comporte au moins un redresseur (D7) dont la cathode est reliée à la borne amont (LM) de l'inductance (L) et dont l'anode est reliée à la deuxième borne d'entrée (BE2), et en ce que la quatrième unité de commutation comporte au moins un transistor à effet de champ (Q8) dont le drain est relié à la borne aval (LV) de l'inductance (L) et dont la source est reliée à la deuxième borne d'entrée (BE2).

9. Dispositif selon l'une des revendications précédentes, caractérisé en ce que les moyens de commutation de liaison comportent deux paires de deux commutateurs possédant un état passant et un état bloquant, les deux commutateurs (Q3, Q4) d'une paire reliant respectivement les deux bornes de l'enroulement primaire (11) à l'une (BE2) des bornes d'entrée du dispositif, tandis que les deux commutateurs (Q1, Q2) de l'autre paire relient respectivement les deux bornes de l'enroulement primaire (11) à la borne aval de l'inductance (L), en ce que, dans le premier état, l'un des commutateurs d'une première paire et l'un des commutateurs de la deuxième paire sont dans leur état passant, les autres commutateurs étant dans leur état bloquant, tandis que, dans le deuxième état, l'autre commutateur de ladite première paire et l'autre commutateur de ladite deuxième paire sont dans leur état passant, les autres commutateurs étant dans leur état bloquant.

10. Dispositif selon la revendication 9, caractérisé en ce que les quatre commutateurs des moyens de commutation de liaison comprennent des transistors de puissance à effet de champ.

**Patentansprüche**

1. Elektrisches Speisegerät, welches umfaßt:
   - einen Eingang für eine Gleichspannungsspeisequelle mit einer ersten Eingangsklemme (BE1) und einer zweiten Eingangsklemme (BE2),
   - einen Ausgang für eine Last (TOP) mit einer ersten (S2-n) und einer zweiten (E2-1) Ausgangsklemme,
   - eine Drosselspule (L) mit einer Ausgangsklemme (LV) und einer Eingangsklemme (LM),
   - einen Transformator (1), der eine Primärwicklung (11) und mindestens eine Sekundärwicklung (12, 13) besitzt,
   - eine Spannungsverstärkerbaugruppe (4), welche eine aus einer Vielzahl von miteinander verbundenen Spannungsverdopplungsbausteinen bestehende Kette enthält, wobei der erste Baustein mit der Sekundärwicklung des Transformators verbunden ist, und wobei die beiden Ausgangsklemmen des Geräts durch zwei Klemmen der Verstärkerbaugruppe (S2-n, E2-1) gebildet werden,
   - Verbindungsumschaltungsmittel (Q1-Q4), die geeignet sind, die besagte Primärwicklung (11) in Reihe mit der besagten Drosselspule (L) mit den besagten Eingangsklemmen (BE1, BE2) zu verbinden, und die einen ersten und einen zweiten Zustand haben, wobei diese Zustände das Fließen eines Induktionsstromes in der Primärwicklung in der einen bzw. in der anderen Richtung ermöglichen,

- Verteilungsumschaltungsmittel (Q5, Q6, D7, Q8), die drei unterschiedliche Zustände haben; sowie
- Steuermittel, die in der Lage sind:
  * die Verteilungsumschaltungsmittel und Verbindungsumschaltungsmittel entsprechend einer Steuerfolge mit gewählter Periodendauer zu steuern, wobei jede Periode zwei aufeinanderfolgende Zyklen (CY1, CY2) von gleicher Dauer (T) umfaßt,
  * innerhalb jedes Zyklus die Verteilungsumschaltungsmittel (Q5, Q6, D7, Q8) nacheinander in ihren ersten Zustand und danach in wenigstens entweder ihren zweiten oder dritten Zustand zu versetzen,
  * die Verbindungsumschaltungsmittel (Q1-Q4) während des ersten Zyklus (CY1) in in entweder ihren ersten oder zweiten Zustand und danach während des zweiten Zyklus (CY2) in ihren anderen Zustand zu versetzen, und
  * innerhalb jedes Zyklus die jeweiligen Dauern der Versetzung der Verteilungsumschaltungsmittel (Q5, Q6, D7, Q8) in ihre entsprechenden Zustände zu modulieren, dadurch gekennzeichnet, daß die Verteilungsumschaltungsmittel (MCD) umfassen:
- eine erste Umschaltungseinheit (Q5), welche die Eingangsklemme (LM) der Drosselspule (L) mit der ersten Eingangsklemme (BE1) verbindet und einen Stromsperrzustand besitzt, sowie einen Durchgangszustand, der den Stromdurchgang in der Richtung von der ersten Eingangsklemme (BE1) zur Eingangsklemme (LM) der Drosselspule (L) gestattet,
- eine zweite Umschaltungseinheit (Q6, D6), welche die Ausgangsklemme (LV) der Drosselspule (L) mit der ersten Eingangsklemme (BE1) verbindet und einen Stromsperrzustand besitzt, sowie einen Durchgangszustand, der den Stromdurchgang in der Richtung von der Ausgangsklemme (LV) der Drosselspule (L) zur ersten Eingangsklemme (BE1) gestattet,
- eine dritte Umschaltungseinheit (D7), welche die Eingangsklemme (LM) der Drosselspule (L) mit der zweiten Eingangsklemme (BE2) verbindet und einen Sperrzustand besitzt, der den Stromdurchgang in der Richtung von der Eingangsklemme (LM) der Drosselspule (L) zur zweiten Eingangsklemme (BE2) verhindert, sowie einen Durchgangszustand, der den Stromdurchgang in der entgegengesetzten Richtung gestattet, und

- eine vierte Umschaltungseinheit (Q8), welche die Ausgangsklemme (LV) der Drosselspule (L) mit der zweiten Eingangsklemme (BE2) verbindet und einen Stromsperrzustand besitzt, sowie einen Durchgangszustand, der den Stromdurchgang in der Richtung von der Ausgangsklemme (LV) der Drosselspule (L) zur zweiten Eingangsklemme (BE2) gestattet,

dadurch, daß im ersten Zustand der Verteilungsumschaltungsmittel, in welchem diese die Eingangsklemme (LM) der Drosselspule (L) mit der ersten Eingangsklemme (BE1) und ihre Ausgangsklemme (LV) mit der zweiten Eingangsklemme verbinden, so daß das Fließen eines Stroms durch die von der Quelle gespeiste Drosselspule (L) hindurch von ihrem Eingang zu ihrem Ausgang ermöglicht wird, die erste (Q5) und die vierte (Q8) Umschaltungseinheit sich in ihrem jeweiligen Durchgangszustand befinden, während sich die anderen Umschaltungseinheiten (Q6,D6; D7) in ihrem jeweiligen Sperrzustand befinden, dadurch, daß im zweiten Zustand der Verteilungsumschaltungsmittel, in welchem diese das Fließen eines Stroms durch die Drosselspule (L) hindurch von ihrem Eingang zu ihrem Ausgang und seine Wiedereinspeisung in die Quelle ermöglichen, die erste (Q5) und die vierte (Q8) Umschaltungseinheit sich in ihrem jeweiligen Sperrzustand befinden, während sich die anderen Umschaltungseinheiten (Q6,D6; D7) in ihrem jeweiligen Durchgangszustand befinden, dadurch, daß im dritten Zustand der Verteilungsumschaltungsmittel, in welchem diese das Fließen eines Stroms durch die Drosselspule (L) hindurch von ihrem Eingang zu ihrem Ausgang und durch die Primärwicklung (11) ermöglichen, die zweite (Q6, D6), dritte (D7) und vierte (Q8) Umschaltungseinheit sich in ihrem jeweiligen Sperrzustand befinden, während sich die erste Umschaltungseinheit (Q5) in ihrem Durchgangszustand befindet.

2.  Gerät nach Anspruch 1, dadurch gekennzeichnet, daß die Last eine Mikrowellensenderöhre für ein Impulsradar ist, dadurch, daß die zweite Ausgangsklemme die eine der Klemmen (E2-1) des ersten Bausteins der Verstärkerbaugruppe ist, und daß sie mit der Wendel (H) der Röhre verbunden ist, während die erste Ausgangsklemme mit der Katode (K) der Röhre verbunden ist, und dadurch, daß die Periode der Steuerfolge synchron mit der Impulswiederholungszeit des Radars ist.

3. Gerät nach einem der vorhergehenden Ansprüche, dadurch gekennzeichnet, daß die Steuermittel in der Lage sind, innerhalb einer Periode in Abhängigkeit von einer repräsentativen Messung des Stromstoßes der Last (TOP) den Übergang der Verteilungsumschaltungsmittel in ihren zweiten Zustand oder in ihren dritten Zustand zu bewirken.

4. Gerät nach Anspruch 3, dadurch gekennzeichnet, daß die repräsentative Messung des Stromstoßes der Last (TOP) an der ersten Ausgangsklemme (S2-n) vorgenommen wird und einer Messung der Abweichung zwischen der an dieser ersten Ausgangsklemme gelieferten Spannung und einer Bezugsspannung entspricht.

5. Gerät nach Anspruch 4, dadurch gekennzeichnet, daß die Steuermittel einen Regelkreis (S1) für die an der ersten Ausgangsklemme (S2-n) gelieferte Spannung umfassen, mit dem die besagte Messung vorgenommen werden kann, und daß sie in der Lage sind, die Dauer der Versetzung der Verteilungsumschaltungsmittel in ihren zweiten und dritten Zustand wertmäßig zu beeinflussen.

6. Gerät nach einem der vorhergehenden Ansprüche, dadurch gekennzeichnet, daß die Steuermittel Stromregelungsmittel umfassen, die in der Lage sind, während eines jeden Zyklus den Mittelwert aus dem Strom, der durch die Drosselspule (L) fließt, wenn sich die Verteilungsumschaltungsmittel in ihrem ersten Zustand befinden, und dem während des restlichen Zyklus durch die Drosselspule fließenden Strom zu realisieren.

7. Gerät nach einem der vorhergehenden Ansprüche, dadurch gekennzeichnet, daß die Verteilungsumschaltungsmittel im zweiten Zustand die Eingangsklemme (LM) der Drosselspule (L) mit der zweiten Eingangsklemme (BE2) und ihre Ausgangsklemme (LV) mit der ersten Eingangsklemme (BE1) verbinden, und dadurch, daß sie im dritten Zustand die Eingangsklemme (LM) der Drosselspule (L) mit der ersten Eingangsklemme (BE1) verbinden.

8. Gerät nach Anspruch 7, dadurch gekennzeichnet, daß die erste Umschaltungseinheit wenigstens einen Feldeffekttransistor (Q5) umfaßt, dessen Senke mit der ersten Eingangsklemme (BE1) verbunden ist und dessen Quelle mit der Eingangsklemme (LM) der Drosselspule (L) verbunden ist,
dadurch, daß die zweite Umschaltungseinheit wenigstens einen Feldeffekttransistor (Q6) und einen Gleichrichter (D6) umfaßt, die in Reihe geschaltet sind, wobei die Quelle des Transistors mit der ersten Eingangsklemme (BE1) verbunden ist und die Anode des Gleichrichters mit der Ausgangsklemme (LV) der Drosselspule (L) verbunden ist,
dadurch, daß die dritte Umschaltungseinheit wenigstens einen Gleichrichter (D7) umfaßt, dessen Katode mit der Eingangsklemme (LM) der Drosselspule (L) und dessen Anode mit der zweiten Eingangsklemme (BE2) verbunden ist, und dadurch, daß die vierte Umschaltungseinheit wenigstens einen Feldeffekttransistor (Q8) umfaßt, dessen Senke mit der Ausgangsklemme (LV) der Drosselspule (L) und dessen Quelle mit der zweiten Eingangsklemme (BE2) verbunden ist.

9. Gerät nach einem der vorhergehenden Ansprüche, dadurch gekennzeichnet, daß die Verbindungsumschaltungsmittel zwei Paare von zwei Schaltern umfassen, die einen Durchgangszustand und einen Sperrzustand haben, wobei die zwei Schalter (Q3, Q4) des einen Paares die beiden Klemmen der Primärwicklung (11) jeweils mit der einen (BE2) der Eingangsklemmen des Geräts verbinden, während die zwei Schalter (Q1, Q2) des anderen Paares die beiden Klemmen der Primärwicklung (11) jeweils mit der Ausgangsklemme der Drosselspule (L) verbinden, und dadurch, daß sich im ersten Zustand der eine Schalter eines ersten Paares und der eine Schalter des zweiten Paares in ihrem Durchgangszustand befinden, während sich die anderen Schalter in ihrem Sperrzustand befinden, wohingegen sich im zweiten Zustand der andere Schalter des besagten ersten Paares und der andere Schalter des besagten zweiten Paares in ihrem Durchgangszustand befinden und sich die anderen Schalter in ihrem Sperrzustand befinden.

10. Gerät nach Anspruch 9, dadurch gekennzeichnet, daß die vier Schalter der Verbindungsumschaltungsmittel Leistungs-Feldeffekttransistoren umfassen.

**Claims**

1. Electric power supply device comprising:
   - an input for a d.c. voltage supply source, having a first input terminal (BE1) and a second input terminal (BE2);
   - an output for a charge (TOP) having a first output terminal (S2-n) and a second output terminal (E2-1);

- an inductor (L) having a downstream terminal (LV) and an upstream terminal (LM);
- a transformer (1) equipped with a primary winding (11) and at least one secondary winding (12, 13);
- a voltage amplifying block (4) comprising a series of a plurality of interconnected voltage doubling modules, the first module of which is connected to the secondary winding of the transformer, the two output terminals of the device being defined by two terminals of the amplifying block (S2-n, E2-1);
- connecting switching means (Q1-Q4) capable of connecting, in series with the said inductor (L), the said primary winding (11) to the said input terminals (BE1, BE2) and having first and second states permitting the circulation of a current from the inductor in the primary winding, respectively in one direction and in the other;
- distributing switching means (Q5, Q6, D7, Q8) having three distinct states; and
- control means capable:
  * of controlling the distributing and connecting switching means in accordance with a selected period sequence, each period comprising two successive cycles (CY1, CY2) of identical duration (T);
  * of placing in succession, within each cycle, the distributing switching means (Q5, Q6, D7, Q8) in their first state and then in at least one of their second and third states;
  * of placing the connecting switching means (Q1-Q4) in one of their first and second states during the first cycle (CY1) and then in their other state during the second cycle (CY2); and
  * of modulating within each cycle the respective durations of the placement of the distributing switching means (Q5, Q6, D7, Q8) in their corresponding states;
  characterised in that the distributing switching means (MCD) comprise:
- a first switching unit (Q5) connecting the upstream terminal (LM) of the inductor (L) to the first input terminal (BE1) and having a current-blocking state and also a passing state permitting the passage of the current in the direction of the first input terminal (BE1) towards the upstream terminal (LM) of the inductor (L);
- a second switching unit (Q6, D6) connecting the downstream terminal (LV) of the inductor (L) to the first input terminal (BE1) and having a current-blocking state and also a passing state permitting the passage of the current in the direction of the downstream terminal (LV) of the inductor (L) towards the first input terminal (BE1);
- a third switching unit (D7) connecting the upstream terminal (LM) of the inductor (L) to the second input terminal (BE2) and having a blocking state preventing the passage of the current in the direction of the upstream terminal (LM) of the inductor (L) towards the second input terminal (BE2) and also a passing state permitting the passage of the current in the opposite direction; and
- a fourth switching unit (Q8) connecting the downstream terminal (LV) of the inductor (L) to the second input terminal (BE2) and having a current-blocking state and also a passing state permitting the passage of the current in the direction of the downstream terminal (LV) of the inductor (L) towards the second input terminal (BE2);
in that, in the first state of the distributing switching means in which they connect the upstream terminal (LM) of the inductor (L) to the first input terminal (BE1) and its downstream terminal (LV) to the second input terminal in order to permit the circulation of an upstream/downstream current through the inductor (L) supplied by the source, the first (Q5) and fourth (Q8) switching units are in their respective passing states while the other switching units (Q6, D6; D7) are in their respective blocking states;
in that, in the second state of the distributing switching means in which they permit the circulation of an upstream/downstream current through the inductor (L) and its reinjection into the source, the first (Q5) and fourth (Q8) switching units are in their respective blocking states while the other switching units (Q6, D6; D7) are in their respective passing states; and
in that, in the third state of the distributing switching means in which they permit the circulation of an upstream/downstream current through the inductor (L) and through the primary winding (11), the second (Q6, D6), third (D7) and fourth (Q8) switching units are in their respective blocking states while the first switching unit (Q5) is in its passing state.

2. Device according to Claim 1, characterised in that the charge is an ultra-high frequency emission tube for pulsed radar; in that the second output terminal is one of the terminals (E2-1) of the first module of the amplifying block and is connected to the coil (H) of the tube while the first output terminal is connected to the cathode (K) of the tube; and in that the period of the control sequence is synchronous with the repetition period of the radar pulses.

3. Device according to any one of the preceding claims, characterised in that the control means are capable of causing the distributing switching means to pass into their second state or their third state within a period as a function of a measurement representative of the surge of the charge (TOP).

4. Device according to Claim 3, characterised in that the measurement representative of the surge of the charge (TOP) is effected at the first output terminal (S2-n) and corresponds to a measurement of the difference between the voltage supplied at that first output terminal and a reference.

5. Device according to Claim 4, characterised in that the control means comprise a loop (S1) for regulating the voltage supplied to the first output terminal (S2-n) and able to effect the said measurement and are capable of influencing the values of the durations of the placement of the distributing switching means in their second and third states.

6. Device according to any one of the preceding claims, characterised in that the control means comprise current-regulating means capable of effecting, in the course of each cycle, the average of the current circulating in the inductor (L) while the distributing switching means are placed in the first state, and of the current circulating in the inductor during the remainder of the cycle.

7. Device according to any one of the preceding claims, characterised in that, in the second state, the distributing switching means connect the upstream terminal (LM) of the inductor (L) to the second input terminal (BE2) and its downstream terminal (LV) to the first input terminal (BE1); and in that, in the third state, they connect the upstream terminal (LM) of the inductor (L) to the first input terminal (BE1).

8. Device according to Claim 7, characterised in that the first switching unit comprises at least one field effect transistor (Q5), the drain of which is connected to the first input terminal (BE1) and the source of which is connected to the upstream terminal (LM) of the inductor (L); in that the second switching unit comprises at least one field effect transistor (Q6) and a rectifier (D6) mounted in series, the source of the transistor being connected to the first input terminal (BE1) and the anode of the rectifier being connected to the downstream terminal (LV) of the inductor (L); in that the third switching unit comprises at least one rectifier (D7), the cathode of which is connected to the upstream terminal (LM) of the inductor (L) and the anode of which is connected to the second input terminal (BE2); and in that the fourth switching unit comprises at least one field effect transistor (Q8), the drain of which is connected to the downstream terminal (LV) of the inductor (L) and the source of which is connected to the second input terminal (BE2).

9. Device according to any one of the preceding claims, characterised in that the connecting switching means comprise two pairs of two switches having a passing state and a blocking state, the two switches (Q3, Q4) of one pair respectively connecting the two terminals of the primary winding (11) to one (BE2) of the input terminals of the device, while the two switches (Q1, Q2) of the other pair respectively connect the two terminals of the primary winding (11) to the downstream terminal of the inductor (L); in that, in the first state, one of the switches of the first pair and one of the switches of the second pair are in their passing state, the other switches being in their blocking state, while, in the second state, the other switch of the said first pair and the other switch of the said second pair are in their passing state, the other switches being in their blocking state.

10. Device according to Claim 9, characterised in that the four switches of the connecting switching means comprise field effect power transistors.

FIG.1

FIG.2

FIG.3

EP 0 450 999 B1

FIG.4

FIG.5

FIG.6

FIG.7

18

FIG.8